# EUROPÄISCHE PATENTANMELDUNG

(11) **EP 1 460 722 A1**
(43) Veröffentlichungstag der Anmeldung: **22.09.2004**
(21) Anmeldenummer: 04004985.0
(22) Anmeldetag: 03.03.2004
(51) Int. Cl.: H01R 9/26, H02B 1/052

(54) **Elektrisches Gerät mit Halte/-Lösevorrichtung**

(30) Priorität: 19.03.2003 EP 03006083; 01.09.2003 DE 10340207
(71) Anmelder: SIEMENS AKTIENGESELLSCHAFT, 80333 München (DE)
(72) Erfinder: Nörl, Gerald, 93133 Burglengenfeld (DE); Schmid, Bernhard, 93133 Burglengenfeld (DE)

(57) **Zusammenfassung**

Um ein Gerät (1) anzugeben, das eine einfache und somit materialreduzierte Halte/-Lösevorrichtung (12) aufweist, ist vorgesehen, dass zum einen ein zwischen einer Schließstellung und einer Öffnungsstellung verschiebbarer Schieber (13) gegeben ist, der ein Federelement (17) aufweist, mittels welchem der Schieber (13) in Richtung der Schließstellung widerlagerbar ist, wobei mit einem zwischen einer Sperrstellung und einer Freigabestellung beweglichen, von dem Schieber (13) getrennten, Riegelelement (19a) das Federelement (17) abstützbar bzw. freigebbar ist. Zum anderen ist ein gehäuseseitig feststehendes, von dem Schieber (13) getrenntes, Riegelelement (19b) vorgesehen, an dem das Federelement (17) abstützbar bzw. unter Einsatz eines geräteexternen Mittels freigebbar ist.

## Beschreibung

Die Erfindung bezieht sich auf ein elektrisches Gerät, insbesondere Reiheneinbaugerät, mit einer Halte/-Lösevorrichtung gemäß Patentanspruch 1 bzw. 2.

Ein solches Gerät ist dafür vorgesehen, in Reihe mit einer Vielzahl weiterer Geräte auf einer gemeinsamen Tragschiene, an seinem Gerätegehäuse montiert zu werden. Es ist häufig als Schutzschalter bzw. als Schalt- oder Steuergerät ausgeführt.

Das Gerätegehäuse eines derartigen, beispielsweise aus der der DE 197 24 945 A1 bekannten, Geräts ist üblicherweise an seinem Geräteboden an der Tragschiene fixiert. Als Geräteboden wird die der Gehäusefrontseite, d.h. der in montiertem Zustand einem Benutzer zugewandten Gehäuseseite, entgegengesetzte Gehäuseseite bezeichnet. Die Kontaktierung des Geräts erfolgt häufig an einer Gehäusequerseite über eine mehreren Geräten gemeinsame Sammelschiene.

Zur Befestigung des bekannten Geräts auf der Tragschiene ist eine Gehäuseführung vorgesehen, an deren einer Flanke eine erste Haltenase zur Umgreifung eines Tragschienenrandes angeformt ist. Eine der ersten Haltenase gegenüber angeordnete und an einer weiteren Flanke der Gehäuseführung vorgesehene zweite Haltenase ist Teil eines Schiebers, der in Richtung der ersten Haltenase verschiebbar ist, um das Gerätegehäuse auf der Tragschiene je nach Schieberstellung zu fixieren oder freizugeben. Der Schieber ist seinerseits über ein schrägstellbares Ansatzteil mit einem Betätigungselement und dieses mit einer Handhabe verbunden, welche zum Lösen des Schiebers dient.

Zur Verringerung der Fertigungs- und Montagekosten ist es wünschenswert, dass das Gerät mit einer von aufwändigen Teilen befreiten Halte/-Lösevorrichtung versehen ist.

Der Erfindung liegt somit die Aufgabe zugrunde, ein Gerät anzugeben, das eine einfache und somit materialreduzierte Halte/-Lösevorrichtung aufweist.

Diese Aufgabe wird erfindungsgemäß gelöst durch die Merkmale des Patentanspruchs 1 bzw. 2. Vorteilhafte Ausgestaltungen sind jeweils Gegenstand der Unteransprüche.

Durch die getrennte Ausführung des beweglichen bzw. feststehenden Riegelelements von dem Schieber, ist eine Halte/-Lösevorrichtung geschaffen, die sich durch einen einfachen Aufbau einerseits und durch Materialeinsparungen andererseits auszeichnet, da auf Grund des Zusammenwirkens des jeweiligen Riegelelements mit dem Schieber die gewünschte Abstütz- und Freigabfunktion ohne den Einsatz von fertigungsintensiven Verbindungselementen gegeben ist. Hierbei ist insbesondere eine Montage bzw. Demontage des Geräts möglich, ohne dass eine gegebenermaßen vorhandene Sammelschiene hierzu entfernt werden müsste.

Mit Vorteil ist das Rastende des Federelements in Schließstellung des Schiebers an einem in der Sperrstellung befindlichen Sperrende des beweglichen Riegelelements bzw. an einem Sperrende des feststehenden Riegelelements verrastet, so dass sich eine einzige Ausführung des Schiebers für unterschiedliche Anwendungsfälle bzw. Geräteausführungen im Sinne eines Gleichteilekonzepts einsetzen lässt. Demnach ist es mit einem baugleichen Schieber der Halte/-Lösevorrichtung möglich, verschiedene Geräte werkzeugfrei bzw. ohne Betätigungselement von der Tragschiene zu lösen.

In konstruktiv besonders einfacher Ausgestaltung ist das Festende des Federelements am Schieber festgelegt, insbesondere einstückig angeformt. Das Federelement ist in platzsparender Ausführung bevorzugt innerhalb des Schiebers angeordnet.

In einer vorteilhaften Ausgestaltung ist der Schieber mit einem Führungsprofil, insbesondere mit Profilhaken bzw. mit einem Profilsteg, und das Gerätegehäuse mit entsprechenden Gegenprofilen zur Unterstützung der Schieberführung versehen, wobei stets eine stabile Führung des Schiebers - auch bei einer längeren Schieberausführung für eine breitere Gehäuseführungen - gegeben ist.

Vorteilhafterweise ist der Schieber mit einem an einer Gehäusequerseite zugänglichen Betätigungsfortsatz versehen, der zum einen unter Druck in Querrichtung die Rücksetzung des Schiebers in seine Ausgangsstellung bzw. unter Druck in Richtung des Gehäusebodens die Freigabe des verriegelten Schiebers zu Demontagezwecken ermöglicht.

In einer vorteilhaften Ausgestaltung weist der Schieber im Bereich des Rastendes auf der dem Geräteboden zugewandten Seite eine Materialreduzierung, insbesondere Abschrägung, zur Auslenkung des Rastendes auf, so dass unter Ausnutzung der vertikalen Federwirkung des Federelements, welche aus der einseitigen Anlenkung an dem Schieber resultiert, das federnde Rastende des Federelements aus der Eingriffsstellung mit dem Sperrende des feststehenden Riegelelements herausgelöst werden kann.

Zur weiteren Handhabungsvereinfachung ist das Riegelelement bevorzugt durch Federkraft in Richtung seiner Sperrstellung vorgespannt. Um auch unter beengten Platzverhältnissen eine einfache Demontage des Geräts sicherzustellen, ist das Riegelelement zweckmäßigerweise mit einem Betätigungsende versehen, das von der Gehäusefrontseite aus einem Benutzer zugänglich ist.

Die Erfindung sowie vorteilhafte Ausgestaltungen gemäß Merkmalen der weiteren Ansprüche werden im Folgenden anhand in der Zeichnung dargestellter Ausführungsbeispiele näher erläutert, ohne dass insoweit eine Beschränkung der Erfindung erfolgt; darin zeigen:
- FIG 1 bis 3: verschiedene Darstellungen eines Geräts mit einer Halte/-Lösevorrichtung in einer verriegelten und in einer entriegelten Stellung;
- FIG 4: ein abschnittsweise, in der verriegelten Stellung, dargestelltes Gerät gemäß FIG 1 mit einem beweglichen Riegelelement;
- FIG 5: ein abschnittsweise, in der verriegelten Stellung, dargestelltes Gerät gemäß FIG 1 mit einem feststehenden Riegelelement;
- FIG 6 bis 8: verschiedene Darstellungen eines Schiebers als Teil der Halte/-Lösevorrichtung;
- FIG 9 und 10: perspektivisch dargestellte Ausführungsformen des Schiebers gemäß der FIG 6 bis 8; und
- FIG 11 und 12: perspektivisch dargestellte Ausführungsformen des beweglichen Riegelelements.

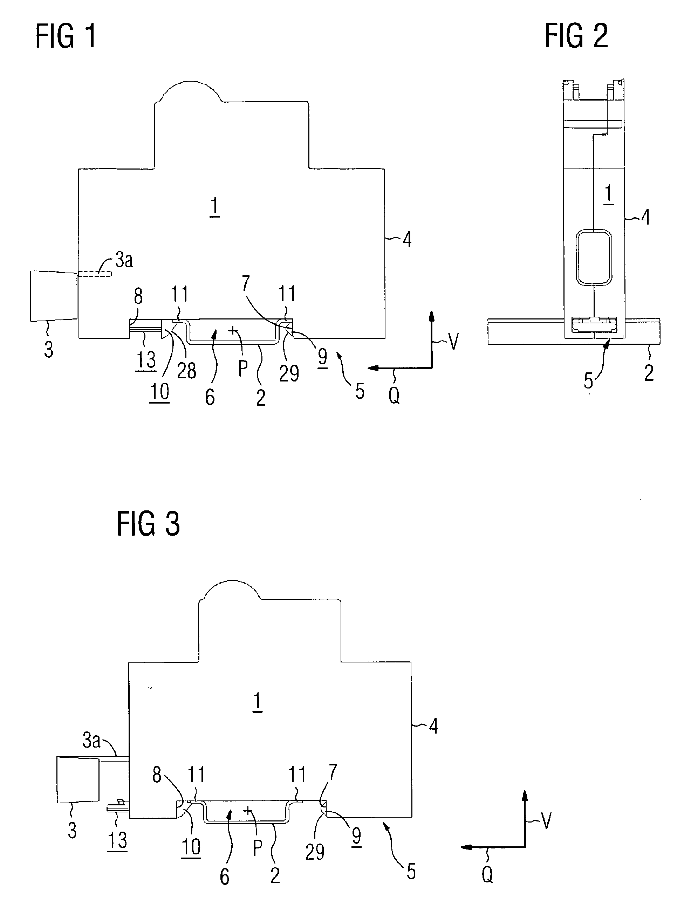

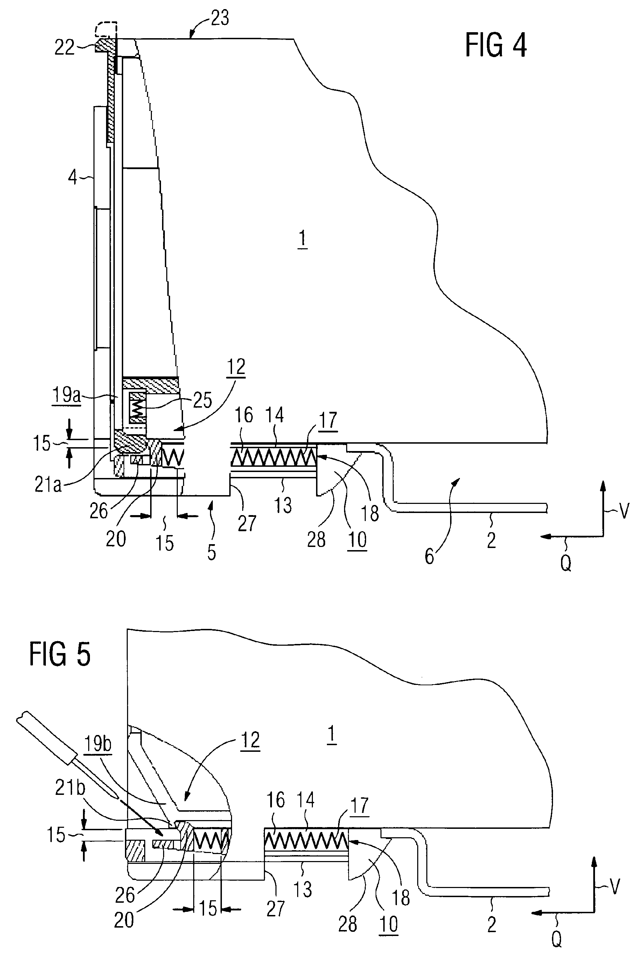

FIG 1 bis 3 zeigen ein elektrisches Gerät 1, insbesondere ein Reiheneinbaugerät, das auf einer Tragschiene 2 montiert ist. In Anlehnung an ihre Profilform ist die Tragschiene 2 gewöhnlich auch als Hutschiene bezeichnet. Das Gerät 1 ist gemäß der FIG 1 und 3 seitlich mit einer Sammelschiene 3 kontaktiert, die mit einem Steckkontakt 3a in das Gerät 1 eindringt. Das Gerät 1 umfasst ein flaches Gerätegehäuse 4, das in der Darstellung gemäß der FIG 4 und 5 teilweise aufgeschnitten ist, und das an einem Gehäuseboden 5 eine nutartige Gehäuseführung 6 gemäß der FIG 1 und 3 zur Aufnahme der Tragschiene 2 aufweist.

Eine Profilachse P der Tragschiene 2 und der korrespondierenden Gehäuseführung 6 ist in der Darstellung gemäß der FIG 1 und 3 senkrecht zur Zeichnungsebene ausgerichtet. Die innerhalb einer zum Gehäuseboden 5 parallelen Ebene und zur Profilachse P senkrecht verlaufende Richtung ist als Querrichtung Q bezeichnet. Das Lot auf eine zum Gehäuseboden 5 parallelen Ebene, d.h. die zur Profilachse P und der Querachse Q senkrechte Richtung ist als Vertikale V bezeichnet. Die Vertikale V ist identisch mit der Einschubrichtung der Tragschiene 2 in die Gehäuseführung 6.

Gemäß der FIG 1 und 3 sind zur Halterung der Tragschiene 2 in der Gehäuseführung 6 zwei an Flanken 7 bzw. 8 der Gehäuseführung 6 angeordnete Haltenasen 9 und 10 angeordnet, die aufeinander zu gerichtet sind und Profilränder 11 der Tragschiene 2 formschlüssig umgreifen und das Gerät 1 somit an der Tragschiene 2 fixieren. Während die eine Haltenase 10 Teil einer so genannten Halte/-Lösevorrichtung 12 ist, ist die andere Haltenase 9 ortsfest mit dem Gerätegehäuse 4 verbunden, insbesondere einstückig am Gerätegehäuse angeformt. Die auch als Schnellbefestigung bezeichnete Halte/-Lösevorrichtung 12 ermöglicht eine einfache und schnelle Montage des Geräts 1 auf der Tragschiene 2 bzw. eine einfache und schnelle Demontage von der Tragschiene 2. Die Halte/-Lösevorrichtung 12 umfasst einen die Haltenase 10 tragenden Schieber 13, der in Querrichtung Q verschiebbar im Gerätegehäuse 4 geführt ist. Die FIG 1 und 2 zeigen in einer Seitenansicht und in einer Vorderansicht den Schieber 13 in seiner Schließstellung. Der gemäß FIG 3 in einer Seitenansicht dargestellte Schieber 13 befindet sich in seiner Öffnungsstellung.

Der Schieber 13 ist gemäß FIG 4 und 5 rahmenartig aufgebaut und umfasst zwei Seitenwände 14 (von denen in der Schnittdarstellung gemäß FIG 1 nur eine sichtbar ist). Die Seitenwände 14 umschließen somit zusammen mit einer Abschlusswand einen hohlen Innenraum 16, in dem ein nur schematisch dargestelltes Federelement 17 gemäß FIG 1 und 3 einliegt. Das Federelement 17 ist an seinem der Haltenase 10 zugewandten Festende 18 ortsfest mit dem Schieber 13 verbunden, insbesondere einstückig an diesen angeformt und erstreckt sich von dort bevorzugt mäanderartig in Querrichtung Q. Das dem Festende 18 entgegen gesetzte Freiende des Federelements 17 steht über die in diesem Bereich 15 abgestuften Seitenwände 14 in vertikaler Richtung hervor. Das Freiende des Federelements 17 ist somit zur Verrastung des Schiebers 13 an einem beweglichen Riegelelement 19a gemäß FIG 4 bzw. an einem feststehenden Riegelelement 19b gemäß FIG 5 ausgebildet und ist aus diesem Grund nachfolgend als Rastende 20 bezeichnet. Das Rastende 20 gemäß FIG 1 und 3 ist mit einer daran angeformten Verriegelungskante ausrüstbar, so dass eine Verrastung gegeben ist, die gegen Erschütterungen und/oder Stöße unempfindlich ist.

Das Riegelelement 19a gemäß FIG 4 ist stäbchen- oder plättchenförmig ausgebildet und entlang der Vertikale V im Gerätegehäuse 4 verschiebbar geführt. Das bewegliche Riegelelement 19a weist ein mit dem Federelement 17 zusammenwirkendes Sperrende 21a auf. Das entgegengesetzte Ende des beweglichen Riegelelements 19a ist als Betätigungsende 22 zur manuellen, insbesondere händischen, Betätigung des beweglichen Riegelelements 19a vorgesehen und steht an der dem Gehäuseboden 5 entgegengesetzten Gehäusefrontseite 23 aus dem Gerätegehäuse 4 hervor.

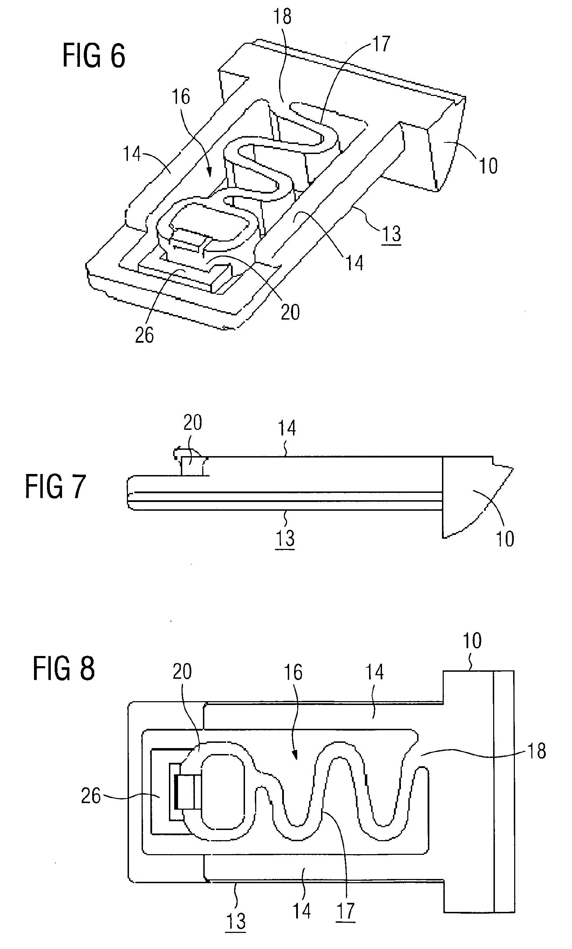

FIG 4 bzw. 5 zeigt das bewegliche Riegelelement 19a bzw. das feststehende Riegelelement 19b in der jeweiligen Sperrstellung. Hierbei ragt das Sperrende 21a des beweglichen Riegelelements 19a gemäß FIG 5 bzw. das Sperrende 21b des feststehenden Riegelelements 19b gemäß FIG 6 an den abgestuften Bereich 15 der Seitenwände 14 heran, so dass das Rastende 20 des Federelements 17 an dem Sperrende 21a anliegt. Das bewegliche Riegelelement 19a bzw. das feststehende Riegelelement 19b dienen somit als Widerlager für das Federelement 17. Der Schieber 13 ist hierdurch in seiner Schließstellung federnd fixiert, d.h. nur unter Überwindung der durch das Federelement 17 auf den Schieber 13 ausgeübten Federkraft in Querrichtung Q verschiebbar, und bei in der Gehäuseführung 6 einliegender Tragschiene 2 vorgespannt. Das bewegliche Riegelelement 19a wird von einem nur schematisch angedeuteten Federglied 25 in seiner Sperrstellung vorgespannt. Dieses Federglied 25 kann als Druck- oder Zugfeder oder als einstückig an das bewegliche Riegelelement 19a angeformter Federlappen ausgebildet sein.

Zur Demontage des Geräts 1 von der Tragschiene 2 wird das bewegliche Riegelelement 19a gemäß FIG 4 durch Zugbelastung an dem Betätigungsende 22 in Richtung der Gehäusefrontseite 23 in die strichliert dargestellte Freigabestellung gezogen. Das Sperrende 21a des beweglichen Riegelelements 19a wird hierdurch aus der Eingriffsstellung mit dem Rastende 20 des Federelements 17 entfernt. Mit anderen Worten wird das Federelement 17 entspannt, so dass nunmehr der Schieber 13 in Querrichtung Q frei beweglich ist.

Zur Demontage des Geräts 1 von der Tragschiene 2 gemäß FIG 5 wird das der Haltenase 10 entgegengesetzte Ende des Schiebers 13, das nachfolgend als Betätigungsfortsatz 26 bezeichnet ist, durch Druckbelastung mit einem geräteexternen Mittel, vorzugsweise mit einem Werkzeug, wie beispielsweise einem Schraubendreher, etwa in Richtung des Gehäusebodens 5 in die strichliert dargestellte Freigabestellung gedrückt. Das Werkzeug kann hierbei auf Grund der Schrägstellung des feststehenden Riegelelement 19b in dem Gerätegehäuse 4 besonders einfach auf den Betätigungsfortsatz 26 zugreifen, wodurch auch der Zugänglichkeit Rechnung getragen wird. Das auf Grund seiner einseitigen Verbindung mit dem Schieber 13 in Richtung der Vertikalen V federnde Rastende 20 des Federelements 17 wird hierdurch aus der Eingriffsstellung mit dem Sperrende 21b des feststehenden Riegelelements 19b entfernt. Mit anderen Worten wird das Federelement 17 entspannt, so dass nunmehr der Schieber 13 in Querrichtung Q frei beweglich ist. Erleichtert wird dies, indem der Schieber 13 im Bereich des Rastendes 20 auf der dem Geräteboden 5 zugewandten Seite eine Materialreduzierung, insbesondere Abschrägung, zur Auslenkung des Rastendes 20 aufweist.

Die Demontage des Gerätes 1 von der Tragschiene 2 gemäß FIG 4 und 5 erfolgt nun, indem das Gerätegehäuse 4 entgegen der Querrichtung Q gegenüber der Tragschiene 2 verschoben wird. Hierdurch verschiebt die Tragschiene 2 den Schieber 13 von seiner in FIG 1 dargestellten Schließstellung in die in FIG 3 dargestellte Öffnungsstellung. Dabei wird die Gehäuseführung 6 in Querrichtung Q erweitert, so dass die Haltenase 9 und die Haltenase 10 gemäß FIG 3 aus der Eingriffsstellung mit der Tragschiene 2 entfernt werden und das Gerät 1 infolgedessen von der Tragschiene 2 abgehoben werden kann. Der Verschiebeweg des Schiebers 13 in Richtung seiner Öffnungsstellung wird erst begrenzt durch den Anschlag der Haltenase 10 an einem korrespondierenden Gehäuseanschlag 27. Durch die in Öffnungsstellung des Schiebers 13 stark erweiterte Gehäuseführung 6 kann das Gerätegehäuse 4 bezüglich der Tragschiene 2 und der damit ortsfesten Sammelschiene 3 gemäß FIG 1 und 3 so weit verschoben werden, dass der Steckkontakt 3a gemäß FIG 1 und 3 vollständig aus dem Gerätegehäuse 4 herausgezogen ist. Das Gerät 1 kann somit von der Tragschiene 2 abgezogen werden, ohne dass eine vorausgehende Demontage der Sammelschiene 3 gemäß FIG 1 und 3 erforderlich wäre.

Die die beiden Seitenwände 14 verbindende Abschlusswand des rahmenartig aufgebauten Schiebers 13 ragt - je nach Dimensionierung des Schiebers 13 - in der Öffnungsstellung in Querrichtung Q aus dem Gerätegehäuse 4 hervor. Durch mittelbaren oder unmittelbaren Druck auf die Abschlusswand, und zwar in Querrichtung Q, wird der Schieber 13 bei demontiertem Gerät 1 auf einfache Weise wieder in seine Schließstellung zurückverfahren. Hierbei schnappt das federbeaufschlagte bewegliche Riegelelement 19a gemäß FIG 4 bzw. das federnde Rastende 20 des Federelements 17 gemäß FIG 5 selbsttätig in seine Sperrstellung zurück, wodurch der in FIG 1 bzw. 4 dargestellte Zustand des Geräts 1 im Wesentlichen wieder hergestellt ist. Insbesondere ist das Federelement 17 wieder widergelagert.

Die erfindungsgemäße Halte/-Lösevorrichtung 12 erlaubt eine einfache Montage des Geräts 1 auf der Tragschiene 2. Hierzu wird das Gerät 1 mit verriegelter Halte/-Lösevorrichtung 12, d.h. mit hinter dem Sperrende 21a,21b gemäß FIG 4 bzw. 5 verrastetem Federelement 17 und sich in Schließstellung befindendem Schieber 13, schräg auf die Tragschiene 2 aufgesetzt, so dass die ortsfeste Haltenase 9 den korrespondierenden Profilrand 11 der Tragschiene 2 umgreift, und der entgegengesetzte Profilrand 11 auf der als Aufgleitschräge 28 ausgebildeten Außenseite der Haltenase 10 aufliegt. Unter Druckbelastung der Aufgleitschräge 28 durch die Tragschiene 2 weicht der Schieber 13 unter Überwindung der Federkraft des Federelements 17 in Querrichtung Q zurück, bis die Tragschiene 2 hinter der Haltenase 10 einschnappt, was zu einer Vereinfachung des Montagevorgangs führt.

Alternativ kann das Gerät 1 auch in horizontaler Stellung oder mit der Haltnase 10 voran auf die Tragschiene 2 aufgeschnappt werden. Dies erlaubt die Montage des Geräts 1 bei vorhandener Sammelschiene 3. Das Gerät 1 wird hierzu zunächst auf den Steckkontakt 3a der Sammelleiste 3 gemäß FIG 1 aufgesteckt und anschließend auf die Tragschiene 2 aufgedrückt. Durch die mechanische Zusammenwirkung der Tragschiene 2 mit der Aufgleitschräge 28 der Haltenase 10 und einer entsprechenden Aufgleitschräge 29 der Haltenase 9 gemäß FIG 1 wird wiederum der Schieber 13 zurückgedrängt, bis die Tragschiene 2 hinter den Haltenasen 9 und 10 einschnappt. Um ein leichtes Abgleiten der Tragschiene 2 über den Aufgleitschrägen 28 und 29 zu ermöglichen, nehmen die Aufgleitschrägen 28 und 29 mit dem Gehäuseboden 5 jeweils einen Winkel α ≥ 45° ein.

In den FIG 6 bis 8 ist der Schieber 13 in einer perspektivischen Ansicht, in einer Seitenansicht bzw. in einer Draufsicht gezeigt. Der Schieber 13 ist rahmenartig aufgebaut und weist die beiden Seitenwände 14 auf. Die Seitenwände 14 umschließen den Innenraum 16, in dem das Federelement 17 vorgesehen ist. Das Federelement 17 ist an seinem der Haltenase 10 zugewandten Festende 18 ortsfest mit dem Schieber 13 verbunden, insbesondere einstückig an diesen angeformt und erstreckt sich von dort bis hin zu seinem Rastende 20, insbesondere mäanderförmig, in Richtung des Betätigungsfortsatzes 26.

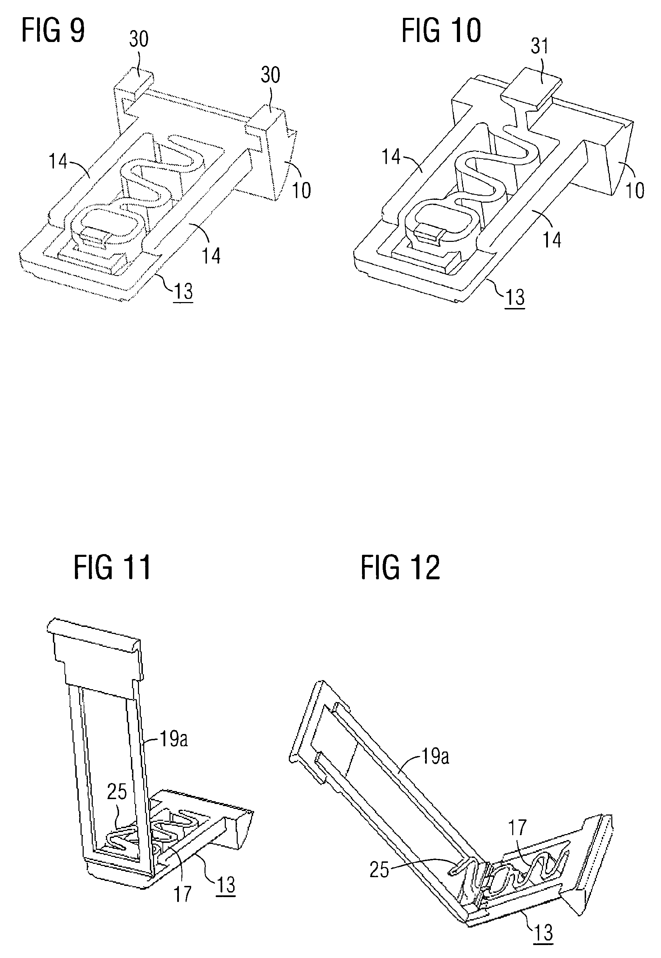

In den FIG 9 und 10 ist eine alternative Ausführungsform des Schiebers 13 dargestellt. Die Ausführungsform gemäß FIG 9 unterscheidet sich von der in den FIG 1 bis 8 gezeigten Ausführung dadurch, dass die Führung des Schiebers 13 neben den beiden von dem Gerätegehäuse 4 gemäß FIG 1 bis 5 umfassten Seitenwänden 14 zusätzlich über seitlich an der Haltenase 10 angeformte Profilhaken 30 erfolgt, die z.B. in Gehäusenuten eingreifen. Gemäß FIG 10 kann diese unterstützende Führung gleichermaßen mittels eines Profilsteges 31 realisiert werden, der ebenfalls in entsprechend ausgeformten Gehäusenuten geführt ist. Der Profilsteg 31 ist T-förmig ausgebildet und mittig auf Höhe der Haltenase 10 zwischen den beiden Seitenwänden 14 positioniert.

In den FIG 11 und 12 sind perspektivisch dargestellte Ausführungsformen des beweglichen Riegelelements 19a jeweils in Wirkverbindung mit dem Schieber 13 gezeigt, wobei die Abstützung des Federelements 17 durch das bewegliche Riegelelement 19a verdeutlich ist. Das bewegliche Riegelelement 19a weist hierbei das Federglied 25 auf, das annähernd V-förmig ausgebildet und einstückig mit dem beweglichen Riegelelement 19a verbunden ist. Das Federglied 25 kann einerseits als Druckfeder und andererseits als Zugfeder zum Einsatz kommen.

Die zuvor erläuterte Erfindung kann wie folgt zusammengefasst werden: Um ein Gerät 1 anzugeben, das eine einfache und somit materialreduzierte Halte/-Lösevorrichtung 12 aufweist, ist vorgesehen, dass zum einen ein zwischen einer Schließstellung und einer Öffnungsstellung verschiebbarer Schieber 13 gegeben ist, der ein Federelement 17 aufweist, mittels welchem der Schieber 13 in Richtung der Schließstellung widerlagerbar ist, wobei mit einem zwischen einer Sperrstellung und einer Freigabestellung beweglichen, von dem Schieber 13 getrennten, Riegelelement 19a das Federelement 17 abstützbar bzw. freigebbar ist. Zum anderen ist ein gehäuseseitig feststehendes, von dem Schieber 13 getrenntes, Riegelelement 19b vorgesehen, an dem das Federelement 17 abstützbar bzw. unter Einsatz eines geräteexternen Mittels freigebbar ist.

## Patentansprüche

1. Elektrisches Gerät (1) mit einem auf eine Tragschiene (2) montierbaren Gerätegehäuse (4), mit einer Gehäuseführung (6) zur Aufnahme der Tragschiene (2), mit zwei einander gegenüberstehenden, an den Flanken (7,8) der Gehäuseführung (6) angeordneten Haltenasen (9,10) zur formschlüssigen Umgreifung der Tragschiene (2), wobei eine erste Haltenase (9) gehäusefest angeordnet ist, und die zweite Haltenase (10) Teil eines quer zur Profilachse (P) der Gehäuseführung (6) zwischen einer Schließstellung und einer Öffnungsstellung verschiebbaren Schiebers (13) ist, mit einem Federelement (17), mittels welchem der Schieber (13) in Richtung der Schließstellung widerlagerbar ist, und mit einem zwischen einer Sperrstellung und einer Freigabestellung beweglichen, von dem Schieber (13) getrennten, Riegelelement (19a), mittels welchem das Federelement (17) abstützbar bzw. freigebbar ist.

2. Elektrisches Gerät (1) mit einem auf eine Tragschiene (2) montierbaren Gerätegehäuse (4), mit einer Gehäuseführung (6) zur Aufnahme der Tragschiene (2), mit zwei einander gegenüberstehenden, an den Flanken (7,8) der Gehäuseführung (6) angeordneten Haltenasen (9,10) zur formschlüssigen Umgreifung der Tragschiene (2), wobei eine erste Haltenase (9) gehäusefest angeordnet ist, und die zweite Haltenase (10) Teil eines quer zur Profilachse (P) der Gehäuseführung (6) zwischen einer Schließstellung und einer Öffnungsstellung verschiebbaren Schiebers (13) ist, mit einem Federelement (17), mittels welchem der Schieber (13) in Richtung der Schließstellung widerlagerbar ist, und mit einem gehäuseseitig feststehenden, von dem Schieber (13) getrennten, Riegelelement (19b), an dem das Federelement (17) abstützbar bzw. unter Einsatz eines geräteexternen Mittels freigebbar ist.

3. Gerät (1) nach einem der Ansprüche 1 oder 2, wobei ein Rastende (20) des Federelements (17) in Schließstellung des Schiebers (13) an einem in der Sperrstellung befindlichen Sperrende (21a) des beweglichen Riegelelements (19a) bzw. an einem Sperrende (21b) des feststehenden Riegelelements (19b) verrastet ist.

4. Gerät (1) nach einem der vorhergehenden Ansprüche, wobei ein Festende (18) des Federelements (17) am Schieber (13) festgelegt ist.

5. Gerät (1) nach Anspruch 4, wobei das Federelement (17) einstückig am Schieber (13) angeformt ist.

6. Gerät (1) nach einem der Ansprüche 4 oder 5, wobei das Federelement (17) innerhalb des Schiebers (13) geführt ist.

7. Gerät (1) nach einem der Ansprüche 1 oder 2, wobei der Schieber (13) mit einem Führungsprofil, insbesondere mit Profilhaken (30) bzw. mit einem Profilsteg (31), und das Gerätegehäuse (4) mit entsprechenden Gegenprofilen zur Unterstützung der Schieberführung versehen sind.

8. Gerät (1) nach einem der vorhergehenden Ansprüche, wobei der Schieber (13) mit einem an einer Gehäusequerseite zugänglichen Betätigungsfortsatz (26) versehen ist.

9. Gerät (1) nach einem der vorhergehenden Ansprüche, wobei der Schieber (13) im Bereich des Rastendes (20) auf der dem Geräteboden (5) zugewandten Seite eine Materialreduzierung, insbesondere Abschrägung, zur Auslenkung des Rastendes (20) aufweist.

10. Gerät (1) nach einem der Ansprüche 1 bis 3, wobei das bewegliche Riegelelement (19a) durch Federkraft in Richtung der Sperrstellung vorgespannt ist.

11. Gerät (1) nach einem der Ansprüche 1 bis 3 oder 10, wobei das bewegliche Riegelelement (19a) senkrecht zum Schieber (13) im Gerätegehäuse (4) angeordnet ist und mit einem von der Gehäusefrontseite (23) aus zugänglichen Betätigungsende (22) versehen ist.
